**Europäisches Patentamt**

**European Patent Office**

**Office européen des brevets**

(11) Veröffentlichungsnummer: **0 199 024**
**B1**

(12) **EUROPÄISCHE PATENTSCHRIFT**

(45) Veröffentlichungstag der Patentschrift:
29.03.89

(51) Int. Cl.⁴: **B 60 R 21/16,** B 60 R 21/09,
**B 62 D 1/18**

(21) Anmeldenummer: **86102577.3**

(22) Anmeldetag: **27.02.86**

(54) Fahrzeug mit einer Sicherheitseinrichtung für den Fahrzeuglenker.

(30) Priorität: **19.04.85 DE 3514178**

(43) Veröffentlichungstag der Anmeldung:
**29.10.86 Patentblatt 86/44**

(45) Bekanntmachung des Hinweises auf die Patenterteilung:
**29.03.89 Patentblatt 89/13**

(84) Benannte Vertragsstaaten:
**DE FR GB IT SE**

(56) Entgegenhaltungen:
**WO-A-85/01707**
**FR-A-1 133 404**
**US-A-2 477 933**
**US-A-2 842 372**
**US-A-3 768 831**
**US-A-4 130 298**

(73) Patentinhaber: **AUDI AG, Postfach 220, D-8070**
**Ingolstadt (DE)**

(72) Erfinder: **Der Erfinder hat auf seine Nennung**
**verzichtet**

(74) Vertreter: **Engelhardt, Harald, Audi AG Postfach 2**
**20, D-8070 Ingolstadt (DE)**

**Beschreibung**

Die Erfindung bezieht sich auf ein Fahrzeug mit einem in seinem Frontbereich angeordneten Antriebsaggregat und einer Sicherheitseinrichtung, durch welche bei einem Frontaufprall das Lenkrad aus dem möglichen Kopfaufschlagbereich in Richtung auf das Armaturenbrett gezogen wird, gemäß dem Oberbegriff des Anspruchs 1.

Bei einem starken Frontaufprall eines Fahrzeuges ist häufig festzustellen, daß der Fahrzeuglenker trotz angelegtem Sicherheitsgurt mit dem Kopf auf das Lenkrad aufschlägt. Dies wird hervorgerufen durch die starke Vorverlagerung des Oberkörpers und des Kopfes oder bzw. zusätzlich durch den Umstand, daß beim Frontaufprall über die Lenksäule das Lenkrad in den Fahrgastraum geschoben wird. In der DE-OS-1 655 597 wird deshalb vorgeschlagen, bei einem Frontaufprall das Lenkrad mittels eines über eine Umlenkvorrichtung geführten Seiles aus dem möglichen Kopfaufschlagbereich in Richtung auf das Armaturenbrett wegzuziehen.

Es ist weiterhin bekannt, im Bereich des Lenkrades ein aufblasbares Luftkissen - einen sogenannten Airbag vorzusehen, welcher mit einer über einen Sensor zündbaren Treibladung in Verbindung steht. Diese Sensoren bilden einen Unsicherheitsfaktor, da sie zu Fehlauslösungen neigen können.

US-A-2 842 372 beschreibt ein Fahrzeug, bei dem bei einem Frontaufprall die Lenksäule in Richtung auf das Armaturbrett gezogen und gleichzeitig ein Luftkissen aufgeblasen wird.

Der Erfindung liegt die Aufgabe zugrunde, mit einfachen Mitteln ein gattungsgemäßes Fahrzeug mit einer Sicherheitseinrichtung so weiterzubilden, daß diese vorteilhaft in Verbindung mit einem aufblasbaren Luftkissen einsetzbar ist. Dabei sollen die Sicherheit erhöht und der Bauaufwand reduziert werden.

Die Aufgabe wird durch die kennzeichnen den Merkmale des Anspruchs 1 gelöst.

Dadurch, daß neben der Einrichtung zum Wegziehen des Lenkrades im Bereich des Lenkrades ein an sich bekanntes, aufblasbares Luftkissen vorgesehen ist, wird der große Vorteil erreicht, daß das Luftkissen in Richtung auf den Fahrzeuglenker zu aufgeblasen wird. Bei Fahrzeugen ohne einer Einrichtung zum Wegziehen des Lenkrades kann sich bei einem Frontaufprall die Lenksäule mit dem Lenkrad aufrichten, so daß das Luftkissen nicht in Richtung des Oberkörpers des Fahrzeuglenkers aufgeblasen wird, sondern möglicherweise nur den Kopf trifft. Hierbei besteht die Gefahr ernsthafter Verletzungen, bedingt durch das Untertauchen des Oberkörpers.

Durch das Merkmal, daß über das Seil mittelbar oder unmittelbar elektrische Bauteile das Aufblasen des Luftkissens auslösen, wenn das Seil über einen vorbestimmten Wert belastet wird, wird eine separate Einrichtung zur Erfassung der Verzögerung eingespart. Es ist jedoch nicht nur die Einsparung einer solchen Einrichtung, sondern auch die verbesserte Sicherheit, welche durch die erfindungsgemäße Ausbildung erreicht wird. Das Aufblasen des Luftkissens wird nur bewirkt, wenn ein Aufprall vorbestimmter Größenordnung vorliegt, bei dem der Einsatz eines Luftkissens sinnvoll ist. Die elektrischen Bauteile können beispielsweise durch elektrische Kontakte gebildet sein, welche zwischen einem das Lenkrad wegziehenden Bauteil der Sicherheitseinrichtung und einem feststehenden Bauteil des Fahrzeugs angeordnet sind. Es ist jedoch auch möglich, durch unmittelbar am Seil wirkende Bauteile (z. B. durch einen Dehnmeßstreifen oder eine Kraftmeßdose) eine sichere Auslösung des Luftkissens herbeizuführen.

Die erfindungsgemäße Ausbildung ist besonders zweckmäßig bei einer Großserienfertigung, bei der unterschiedliche Ausstattungsvarianten in wirtschaftlicher Weise Berücksichtigung finden sollen. Wird bei allen Fahrzeugen eine Einrichtung zum Wegziehen des Lenkrades eingesetzt, dann kann in Kombination mit einem Sicherheitsgurt der Kopfaufschlag auf das Lenkrad verhindert werden. In Kombination mit einem Luftkissen (mit oder ohne Sicherheitsgurt) wird durch das Wegziehen des Lenkrades erreicht, daß das Luftkissen während des Befüllens nicht hochsteigt, sondern auf den Oberkörper des Fahrzeuglenker zu aufgeblasen wird. Außerdem wird stets erreicht, daß die Sicherheitseinrichtungen nur dann in ihre Wirkstellung gelangen, wenn diese benötigt werden, also bei einem Frontaufprall oder bei einem Aufprall schräg von vorne. Es ist allgemein bekannt, daß ein im Bereich des Lenkrades angeordnetes Luftkissen auch nur bei dieser Art von Unfällen eine hohe Schutzwirkung bietet.

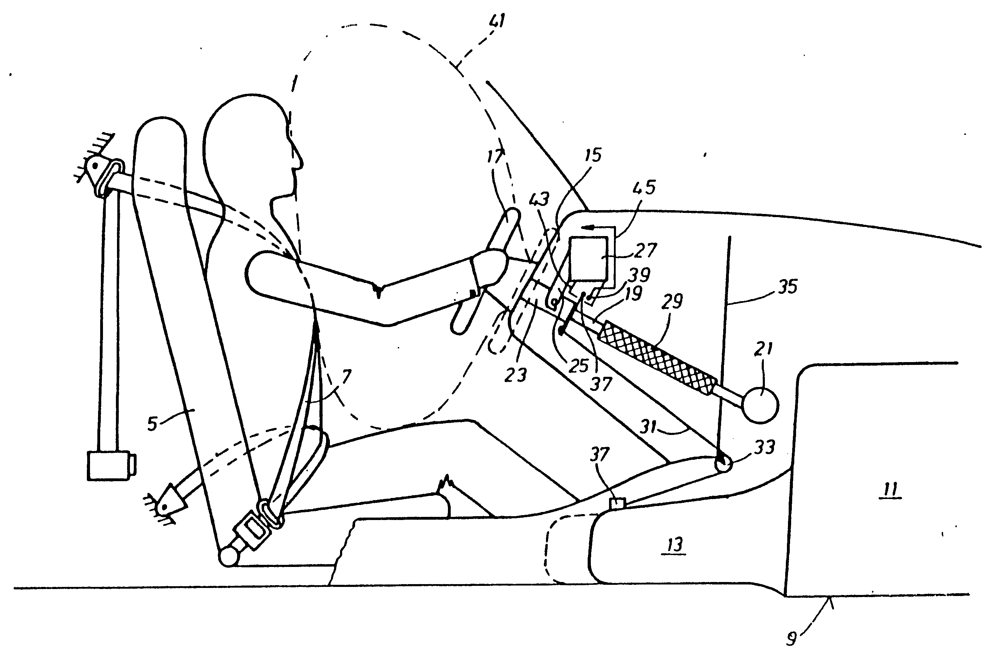

Ein Ausführungsbeispiel der Erfindung ist in der Zeichnung dargestellt, welche in Seitenansicht schematisch den vorderen Bereich des Innenraumes und den daran anschließenden Motorraum eines Personenkraftwagens zeigt.

Auf den Vordersitz 5 eines Personenkraftwagens ist eine Person mittels eines bekannten Dreipunktsicherheitsgurtes 7 gehalten. Im Frontbereich des Fahrzeuges ist das Antriebsaggregat angeordnet, welches aus einem längs eingebautem Motor 11 und einem sich daran nach hinten anschließenden Getriebe 13 besteht.

Wie aus der Zeichnung unmittelbar ersichtlich, ist etwa parallel zu einem Armaturenbrett 15 im Innenraum ein Lenkrad 17 angeordnet, welches über eine Lenksäule 19 mit einem Lenkgetriebe 21 in Verbindung steht. Ein nicht drehbares Lagerteil 23 für die Lenksäule 19 ist durch eine Lasche 25 an einem im Bereich des Armaturenbretts 15 angeordneten Querträger 27 festgelegt. Die Anbindung des Lagerteiles 23 an die Lasche 25 ist so gewählt, daß ein Ausklinken der Lasche 25 möglich ist.

Um eine axiale Verschiebung der Lenksäule 19 und damit des Lenkrades 17 zu ermöglichen, umfaßt die Lenksäule 19 einen als Gitterrohr 29 bestehenden Abschnitt, der bei einer vorbestimmten Belastung eine axiale Verschiebung zuläßt.

Am Lagerteil 23 der Lenksäule 19 ist ein Seil 31 befestigt, welches bis zu einer Umlenkung 33 im Bereich der Stirnwand 35 des Fahrzeuges und von dort zu einer Befestigungsstelle 37 am Getriebe 13 geführt ist.

Bei einem Frontaufprall stützt sich bereits bei geringer Verformung des Fahrzeugbugs das Aggregat 9 am Hindernis ab und die leichter verformbare Karosserie schiebt sich über das Antriebsaggregat 9. Dadurch kommt eine Relativverschiebung zwischen dem Antriebsaggregat 9 und der Fahrzeugkarosserie zustande (gestrichelt dargestellt). Diese Relativverschiebung wird durch das am Getriebe 13 festgelegte Seil 31 über das Lagerteil 23 auf das Lenkrad 17 übertragen, wodurch dieses in Richtung Armaturenbrett 15 gezogen wird Parallel zu diesem Bewegungsablauf klinkt die Lasche 25 am Lagerteil 23 aus; gleichzeitig wird das Gitterrohr 25 in axialer Richtung zusammengestaucht.

Beim Wegziehen des Lagerteils 3 wird außerdem über elektrische Kontakte 37 und 39 ein Impuls erzeugt, welcher eine in der Zeichnung nicht dargestellte Treibladung für ein Luftkissen 41 (gestrichelt dargestellt) zündet.

Wie die Zeichnung zeigt, ist der Kontakt 37 am Lagerteil 23; der Kontakt 39 über ein Gehäuse 43 am Querträger 27 festgelegt. Vom Kontakt 39 führt ein Kabel 45 unmittelbar zur Treibladung für das Luftkissen 41.

## Patentanspruch

Fahrzeug mit einem in seinem Frontbereich angeordneten Antriebsaggregat und einer Sicherheitseinrichtung, durch welche bei einem Frontaufprall das Lenkrad aus dem möglichen Kopfaufschlagbereich in Richtung auf das Armaturenbrett gezogen wird, wobei das Wegziehen des Lenkrads durch ein über eine Umlenkeinrichtung geführtes Seil bewirkt wird, welches die bei einem Frontaufprall auftretende Relativverschiebung zwischen dem Antriebsaggregat und einem sich nach hinten anschließenden Karosseriebauteil auf das Lenkrad überträgt, dadurch gekennzeichnet, daß im Bereich des Lenkrades (17) ein an sich bekanntes, aufblasbares Luftkissen (41) angeordnet ist, und daß über das Seil (31) mittelbar oder unmittelbar elektrische Bauteile (37, 39) das Aufblasen des Luftkissens (41) auslösen, wenn das Seil (31) über einen vorbestimmten Wert belastet wird.

## Claim

Vehicle with a drive unit positioned in the front part and a safety device by which the steering wheel is pulled out of the possible head impact area towards the dashboard in a frontal impact, in which the steering wheel is pulled away by a cable which is passed over a guiding device and which transmits to the steering wheel the relative displacement, which occurs on frontal impact, between the drive unit and a body component connected to the back of it, characterized in that an inflatable air cushion (41) known per se is positioned in the region of the steering wheel (17) and that by means of the cable (31) electrical components (37, 39) initiate the inflation of the air cushion (41) directly or indirectly when the cable (31) is loaded above a predetermined value.

## Revendication

Véhicule avec un bloc moteur disposé à l'avant et un dispositif de sécurité, au moyen duquel lors d'un choc frontal le volant est extrait hors de la zone possible de choc pour la tête en direction du tableau de bord, l'éloignement du volant étant provoqué par un câble guidé par un dispositif de renvoi, câble transmettant au volant le déplacement relatif survenant, dans le cas d'un choc frontal, entre le bloc moteur et une partie structurelle de la carrosserie qui fait suite vers l'arrière de celui-ci, caractérisé en ce qu'un coussin d'air (41) gonflable, connu en soi, est disposé dans la zone du volant (17), et en ce que des éléments électriques (37, 39) déclenchent, indirectement ou directement, par l'intermédiaire du câble (31) le gonflage du coussin d'air (41) lorsque le câble (31) est chargé au-delà d'une valeur prédéterminée.

EP 0 199 024 B1